# EUROPEAN PATENT APPLICATION

(11) **EP 0 738 968 A2**
(43) Date of publication of application: **23.10.1996**
(21) Application number: 96400838.7
(22) Date of filing: 19.04.1996
(51) Int. Cl.: G06F 9/44

(54) **User interface management system for geometric modeling software system**

(30) Priority: 20.04.1995 US 425407
(71) Applicant: COMPUTERVISION CORPORATION, Bedford, Massachusetts 01730 (US)
(72) Inventor: Higgins, Timothy S., San Diego, CA 92121 (US)
(74) Representative: Schmit, Christian Norbert Marie

(57) **Abstract**

An object-oriented system is used to manage tools and user interface with these tools in a geometric modeling system, such as a computer aided design (CAD) package. Tools are linked at start-up time, and each tool informs a tool manager which messages it should be sent and its entry points. Thereafter, as the tool manager receives messages from tools and/or the user interface, it sends messages only to the appropriate tools. The software which includes the tools are stored in a nested class/subclass arrangement such that software components which are common to several tools are stored once as a separate tool.

## Description

### Field of the Invention

The invention relates to geometric modeling software. More particularly, the invention relates to a method and apparatus for managing the interface between the utilities or tools of a geometric modeling software package and the user.

### Background of the Invention

A geometric modeling software package, such as a computer aided design (CAD) software package, is used to create models of three dimensional objects which can be displayed in a two dimensional representation of a computer video display terminal. The model can then be manipulated to change an aspect or characteristic of the three dimensional object, or the view of the two dimensional representation. The model includes data which defines the three dimensional object being modeled in terms of a plurality of geometric entities (i.e., shapes) in a linked network. The network defines how the geometric entities are related to each other topologically. Each geometric entity is defined in terms of its characteristics such as size, shape, color, and material. Each entity is also defined in relation to the other entities of the model including positioning and connections.

The software for creating the data defining a model and manipulating the model includes code for performing a variety of functions. Such functions include defining geometric entities such as points, lines, curves and surfaces in three dimensional space, and positioning such entities relative to each other. The software for performing each function or part of a function is called a tool. For instance, one tool may be the "create-a-line" tool which is used to create a line between two points. The software system, thus, is composed of a plurality of tools. To perform the functions to create or manipulate a three dimensional object, the user must specify a tool, and provide appropriate information for the tool to operate.

For example, in a window-based environment, a user might position a cursor on the screen, by use of a mouse, over a particular icon representing a particular tool, such as "create-a-line." Upon selecting the tool, by clicking the mouse button, the tool operates to request necessary information. Depending upon the complexity of the tool, the type of object and the type of interface, the user can enter information by using a mouse, keyboard or combination. Information also may be previously stored and then recalled from a memory source. For a create-a-line tool, the user would input the starting and ending points, which could be done by positioning the cursor on the screen with the mouse. The user would also need to define the width and color of the line, and any existing object to which it is connected or associated. Some information may be preset by other tools or can be determined by the tool based upon existing parts of the object.

A user interface is required to coordinate selection and operation of the tools. In a window-based environment, the interface may have two parts. A graphical user interface (GUI) provides the screen outputs and receives the mouse and keyboard inputs from the user. A tool manager coordinates with the GUI to operate the tools and retrieve information. The tool manager is a portion of the geometric modeling software system.

Typically, a geometric modeling software system includes a predefined set of tools and a tool manager interface. The system includes a complete, executable set of code. The tools and interface are not modifiable without changing the original code and recompiling it. Thus, third party application developers and users cannot create additional tools, modify existing tools, or change the interface. Additionally, even if the original code is available, creation or modification of tools is extremely complicated. All features of the tool, and all processes for requesting and accepting the necessary information must be created for a tool.

Therefore, a need exists for an improved geometric modeling software package and particularly an improved interface. A need exists for a software package which permits creation of additional tools and modification of tools by a third party application developer or user. A further need exists for a simplified process for creating or modifying tools.

### Summary of the Invention

The deficiencies of existing systems are overcome by the present invention which includes a tool manager for a geometric modeling software package. The tool manager is an object-oriented software program with run-time binding of commands (tools) to an application. Each tool in the present invention is a software construct comprising one or more message/function pairs. Upon receipt of a message, the tool performs the appropriate functions. The tools contain the logic of the application, share system resources, and are dynamically registered and loaded at start-up time.

In the object-oriented paradigm of the present invention, a tool is essentially an object (or class of objects) and contains the methods that are defined on those objects. The tools are developed in a class/subclass arrangement, wherein common characteristics of a set of tools are coded in a separate class tool. Thus, each tool only includes the code for its individual, unique functionality. Multiple layers of class/subclass tool nesting are possible. In the object-oriented paradigm of the present invention, it is easy for a software developer or user to create tools. Code does not need to be created to perform all of the functions of the tool. By using classes, much of the functionality of a tool can be derived from existing tools. Only the unique functionality must be coded and compiled.

The tool manager of the present invention provides an interface with the user through message handling. Each tool provides defined functions in response to certain messages. The tool manager determines which messages are to be provided to each tool. Messages may include information received from a mouse or keyboard or information created by tool. Upon initialization, each tool defines which messages it is to receive. Through run-time binding of tools and message handling, creation and modification of tools is simplified. Tools can run simultaneously and can operate in connection with other tools by passing messages between tools. Thus, individual tool operation is minimized, and common functions are coded once. Upon creation or modification, only the single tool needs to be compiled, not the entire code.

It is an object of the present invention to provide an improved tool manager for a CAD system. It is a further object to provide a tool manager which allows a software developer to easily add and modify tools and to add functionality to a CAD software package. It is a further object of the present invention to permit addition of tools without re-compiling and linking the software code when a tool is added.

It is a further object of the present invention to provide a CAD software package in which a high degree of software encapsulation is achieved so that tools and be easily added and selected for a particular user.

It is a further object of the present invention to provide a CAD software package where tools can be created from existing tool functionality. If is a further object to provide a CAD software package having reduced code for providing tool functionality. It is a further object of the present invention to provide a tool manager with an object-oriented paradigm where tools are in a class/subclass arrangement.

With these and other objects, advantages and features of the invention as may become apparent, the nature of the invention may be more clearly understood by reference to the following detailed description of the invention, the appended claims and the several drawings attached hereto.

### Brief Description of the Drawings

FIG. 1 is a block diagram of the hardware for the present invention;
FIG. 2 is a representation of a user interface for use with the present invention;
FIG. 3 is a representation of the relationship between software components of the present invention;
FIG. 4 is a block representation of the class/subclass tool structure according to the present invention; and
FIG. 5 is a block flow diagram of operation of the tool manager according to the present invention.

### Detailed Description of A Preferred Embodiment

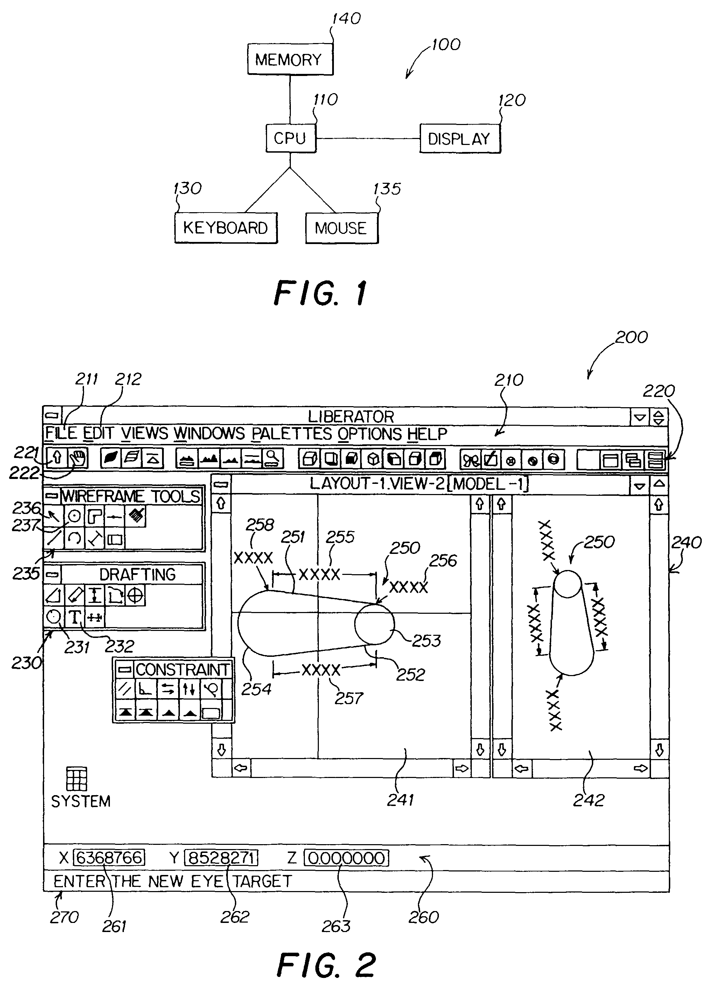

FIG. 1 illustrates the hardware for a geometric modeling software system. A central processing unit 110 executes computer instructions stored in a memory 140 (either a RAM or ROM). The computer instructions allow the creation and manipulation of models of three-dimensional objects and their two-dimensional representation on a display 120. Characteristics of the objects and their relative positions are stored in the memory 140. Characteristics of the display of the object are also stored in the memory 140 and combined with the characteristics of the object in order to produce an image on display 120. A display 120 may include a printer or plotter for making a hard copy printout of the two-dimensional image of the three-dimensional model.

FIG. 2 shows a screen display 200 illustrating a graphical user interface (GUI) for interacting between the geometric modeling software system and the user. The illustrated GUI has a format typical for interfaces in a Windows based environment. At the top of the screen is a menu bar 210 having various selectable options 211, 212. Selection of one of the options will lead to a subsequent menu, either in the menu bar 210 or as a pull down menu (not shown). Additional selections lead to a choice of tools.

Below the menu bar 210 is a tool bar 220. The tool bar includes icons 221, 222 representing tools to be selected. A tool is a software construct that contains the logic of an application. The tools perform functions for creating three-dimensional models and their two-dimensional representations. Alternatively, a tool box 230, 235 can include the tool icons 231, 232, 236, 237. Tool boxes 230, 235 can be used for grouping certain types or classes of tools which relate to a particular model.

A model representation 240 provides a two-dimensional view of the three-dimensional object being modeled. More than one view of the object can be displayed simultaneously by using separate model windows 241, 242. An object representation 250 consists of a number of different individual objects 251-258 which are jointly positioned relative to each other to create the model. A position bar 260 and information bar 270 are located at the bottom of the screen. The information bar 270 provides instruction for using the system to perform actions to create or manipulate the objects. The position bar 260 includes the coordinates along the X 261, Y 262, and Z 263 axes of the current cursor or pointer position.

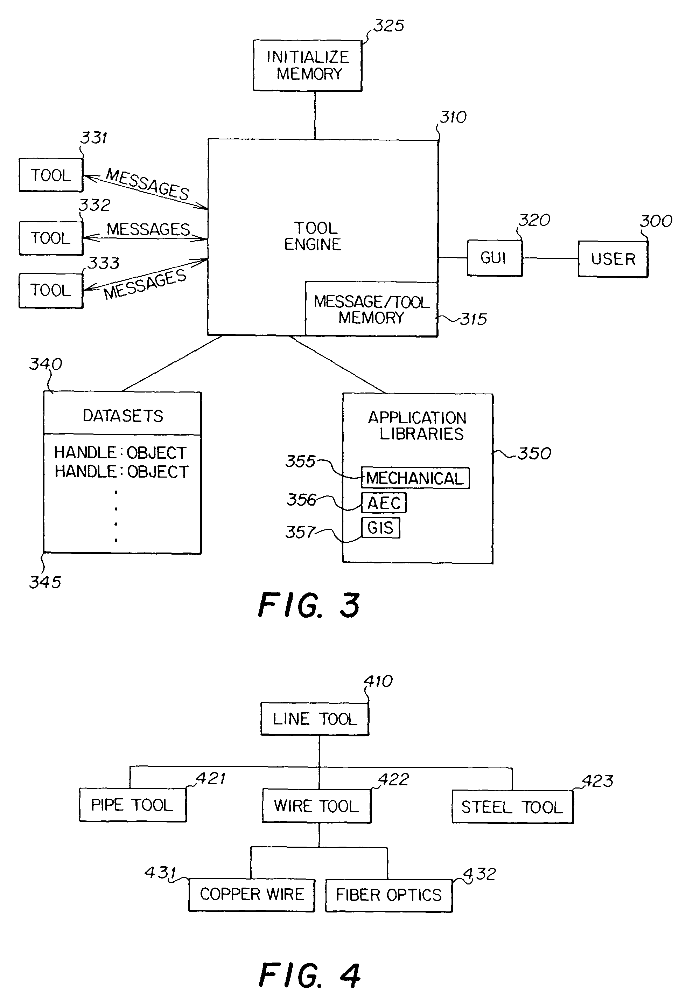

The management system of the present invention operates between the GUI and the tools to allow the user to select and use tools as illustrated in FIG. 3. A tool engine 310 is connected to the user 300 through the graphical user interface 320. The user manipulates the keyboard 130 and mouse 135 to enter information to the tool engine 310. The tool engine 310 coordinates the passage of messages between tools, datasets and the user. Messages are the basic information for coordinating operation of the tools. Messages include such information as data points, types of lines, and types of objects. Each tool operates in response to certain defined messages. The tool engine 310 includes a message/tool memory 315 which associates tools and the messages they are to receive. When a message is received by the tool engine 310, it determines the appropriate tools to receive the message in the memory 315.

The tools are used to manipulate objects stored in memory 140 as datasets. A model may be a collection of three-dimensional geometric objects. A dataset 340 is stored in a memory 140 as a set of objects and their characteristics. Each object includes a handle 345 which is used to reference that object. The application environment and the user interface 320 determine the specific meaning and output format for the dataset. Accordingly, objects listed in a dataset are combined in a specific format for display. The application environment can manipulate the display of a dataset independently from the tools which operate on the contents of the dataset. Alternatively, tools may also include functions for manipulating the display of the data set.

A tool 331, 332, 333 is a portion of software code which shares all system resources with other tools and performs particular functions specific to that tool. The tools include various functions which are stored at specified addresses, actual or virtual, in the memory. The tools are dynamically registered and loaded at run time. In a Windows^{™} environment, a tool may be a dynamic link library (DLL), in a Unix^{™} environment, it may be a shared library. Since the tools share resources, each tool only provides the functionality specific to that tool. For example, a line creation tool needs only to create the characteristics of the line for an object. The functions of setting viewing parameters or changing attributes of the line are performed by other tools. All the tools are equal and can be executed simultaneously. Therefore, one tool can be accessed in the middle of executing another one. Simultaneous execution may include parallel processing, serial processing in a defined or arbitrary order, and interleaving processing of functions depending upon the hardware being used.

Tools are objects and can be divided into classes, superclasses and subclasses. This object oriented environment permits a tool to have characteristics from another tool, which is its class. This further reduces the specific functionality of a tool. The class and subclass structure is illustrated in FIG. 4. For example, tools may exist for creating representations of pipes 421, wires 422 and steel 423. The functionality required to create these different types of elements would have some common characteristics with respect to line placement and representation. Therefore, a line tool 410 would be a superclass to these other tools and would perform the functionality common to the tools. Furthermore, as illustrated in FIG. 4, certain differences in functionality may exist between kinds of wires. Therefore, tools for copper wire 431 and fiber optics 432 are created as subclasses of the wire tool 422. The copper wire tool 431 adds its specific functionality to the general functionality of the wire tool 422 and of the line tool 410, which are the classes to which it belongs. The use of classes and subclasses permits the creation of additional tools solely by producing the additional functionality. The common functionality with the classes to which it belongs does not need to be recreated.

Additionally, tools can operate simultaneously and can communicate across resources. A tool can send a message to other tools requesting their services. Therefore, certain functionality does not have to be repeated for each tool. For example, several tools may wish to allow the user to select an item color. Each tool can send a message to a color tool which provides the appropriate dialog boxes and returns the selected color information to the tool requesting it. Similarly, getting points or rubber banding functions can be accomplished by a tool distinct from the actual functionality being requested.

The tools can be divided into application libraries 350. An application library is a set of tools relating to a certain type of model. When the user selects an application library, the tools in the library become available to it. Other tools which are not related to the functionality required for the specific model, and are not within the application library, are omitted and not accessed. This saves space in the memory 140 and improves operation of the system.

Creating the tools as dynamic link libraries or shared libraries permits the easy creation and modification of tools. Since tools are not loaded or linked until run time, the superclasses and subclasses of tools do not need to be recompiled when a change is made to a single tool. The new tool or revised tool is compiled and bound into a dynamic link library. The name of the tool and the new library is added to a start-up text file. At start-up time, the tool engine 310 automatically installs and links the tools listed in the start-up text file.

An initialize memory 325 includes the names of the tools, the names of the dynamic link libraries, and the location of the code for each tool. Upon start-up, the tool engine 310 reads material from the initialize memory 325, and links the tools. The tool engine 31 also sends a message to each tool 331, 332, 333 requesting a list of messages which the tool desires to receive. Each tool is designed to respond to this message by providing a list of messages to the tool engine 310. Thus, each tool must include at least this functionality. The message list includes a message identifier and a string. The string indicates the type of message and the message content. The message identifier represents the tool function which is accessed in response to a message. Preferably, the message identifier is the address of a function of the tool which acts in response to the message. The messages and the corresponding tools are stored in the message/tool memory 315.

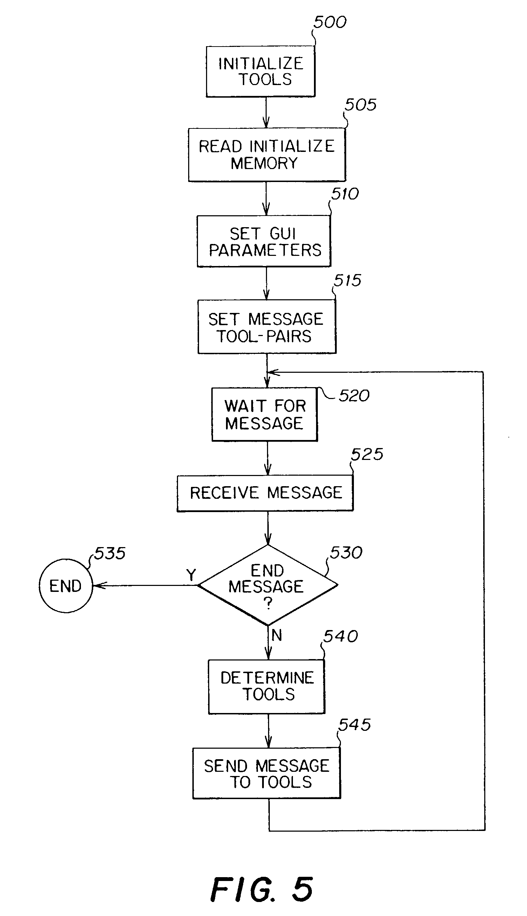

FIG. 5 illustrates operation of the tool engine 310. At step 500, the tools are initialized. As noted above, the tools are initialized by reading the initialized memory 325 (step 505). The tool engine then sets the parameters for the graphical user interface. These parameters include the menu bar and menu options, tool bar, tool boxes and view windows. This information is also stored in the initialize memory 325. At step 515, the message tool-pairs are determined and set in the message/tool memory 315. The message-tool pairs are determined from messages sent and received from each tool at initialization. Once the message tool-pairs are set, the engine waits for a message at step 520.

Three types of messages are possible. First, the tool engine 310 defines certain messages itself. The initialization message sent to each tool to determine the message/tool pairs is generated by the tool engine 310. Also, the tool engine will generate messages to start tools or certain functions when changes occur in the user interface. For example, a tool can be started by selecting the tool icon in the user interface. Also, opening a new data set can result in starting certain tools associated with a specified type of data set. Typically, the tool engine 310 generates messages in connection with manipulation of the user interface 320 by the user, or operation of the application environment. Second, a tool can define a message for itself. This is similar to a virtual function in C++^{™}. Also, when a message is sent by a tool to itself, the various subclasses to the tool may also receive and use the message to perform certain functions. Third, tools can send messages to other specified tools, or to all tools.

To send a message, the tool passes a message identifier and several parameters to the tool engine. Parameters can be any values which can be used by the function of a tool receiving the message. Upon receipt of a message (step 525), the tool engine determines if the message is to terminate operation (step 530). If the message is not to terminate operation, the tool engine determines which tools are to receive the particular message at step 530. Additionally, in determining which tools are to receive a message, some tools may receive a message only when certain conditions are present. For example, a line tool may not operate or be selected until a certain model has been opened. Therefore, the tool engine passes the messages only when they are required by the tools.

Passage of a message is performed by commencing operation of a function at the address indicated by the message identifier in the receiving tool. Parameters are passed in the same manner as for accessing a subroutine. Typically, the parameters are stored in specified locations for use by the called function. Upon receipt of a message, a tool may perform certain functions, including generating additional messages. When a message is to be passed to several different tools, the functions of the receiving tools are serially operated in the order of registration. Alternatively, parallel processing may be used to execute several functions of different tools simultaneously.

The tool engine continues to repeat steps 520-545 to pass all messages between the user and the tools. When messages are to be passed between different tools, the message needs to be translated to the proper form for the receiving tool. Preferably, the message identifier corresponds to a certain message from the sending tool. The receiving tool may use a different identifier for that message. The tool engine uses the string associated with a message identifier to look up the appropriate identifier for the receiving tool.

Although the present invention has been illustrated in connection with a CAD environment, other types of systems may also include object oriented tools and the tool engine for message passing. The tools are used to manipulate a dataset. The tool engine passes messages between tools to control the order of operation and the types of operations performed on the dataset. A separate application provides the display and user interface for the dataset. In a modeling environment, the CAD system displays the object in the dataset. In a word processing environment, a dataset could include the letters, typesfaces, and locations which are then displayed or printed by the word processing system. Similarly, the present invention does not require a Windows^{™} or Unix interface^{™}. The interface merely controls the format for inputs and outputs. The tool engine uses the input and outputs as messages and passes the messages to the appropriate tools for operation. Any interface which permits the runtime linking of tools and message coordination with a tool engine can be used.

Although a preferred embodiment is specifically illustrated and described herein, it will be appreciated that modifications and variations of the present invention are covered by the above teachings and within the purview of the appended claims without departing from the spirit and intended scope of the invention.

## Claims

1. An interface for a geometric modeling software system comprising:
a memory for storing a plurality of message-function pairs;
receiving means for receiving a message;
function determining means for determining which of a plurality of functions are associated with the received message in the memory; and
passing means for executing said determined functions in response to said message.

2. An interface according to claim 1 further comprising initialization means for storing message-function pairs in said memory.

3. An interface according to claim 1, further comprising an input unit for generating a message based upon a user input.

4. An interface according to claim 1, wherein said message receiving means receives a message from a function.

5. An interface according to claim 1, further comprising dataset memory for storing a plurality of objects.

6. An interface according to claim 5, wherein each object in said dataset memory is associated with a handle for accessing the object.

7. An interface according to claim 5, wherein at least one of said functions accesses said dataset memory to retrieve said objects.

8. An interface according to claim 7, further comprising a display for displaying objects retrieved from said dataset memory.

9. An interface according to claim 7, wherein one of said functions changes an object in said dataset memory.

10. An interface according to claim 1, wherein at least one of said functions generates a message to be sent to another function.
